# EUROPÄISCHE PATENTSCHRIFT

(11) **EP 2 282 921 B1**
(45) Veröffentlichungstag und Bekanntmachung des Hinweises auf die Patenterteilung: **09.11.2011**
(21) Anmeldenummer: 09749535.2
(22) Anmeldetag: 30.04.2009
(51) Int. Cl.: B62D 1/184, F16B 2/18

(54) **SPANNBOLZEN**
CLAMPING BOLT
BOULON DE SERRAGE

(30) Priorität: 20.05.2008 DE 102008024405
(43) Veröffentlichungstag der Anmeldung: 16.02.2011
(73) Patentinhaber: ThyssenKrupp Presta AG, 9492 Eschen (LI)
(72) Erfinder: OERTLE, Max, FL-9493 Mauren (LI); MAAG, Michael, CH-9008 St. Gallen (CH); SCHNITZER, Rony, FL-9491 Ruggell (LI); GALEHR, Robert, FL-9493 Mauren (LI)
(74) Vertreter: Fechner, Thomas
(86) Internationale Anmeldenummer: PCT/EP2009/003124
(87) Internationale Veröffentlichungsnummer: WO 2009/141045

(56) Entgegenhaltungen:
- EP-A- 0 427 584
- EP-A- 1 500 570
- WO-A-2007/026118
- GB-A- 910 258
- US-A1- 2005 178 231

## Beschreibung

Die vorliegende Erfindung betrifft Spannbolzen für eine Feststelleinrichtung einer verstellbaren Lenksäule, wobei am Spannbolzen zumindest ein Nocken einstückig angeformt ist. Darüber hinaus betrifft die Erfindung auch eine Feststelleinrichtung für eine verstellbare Lenksäule bzw. eine verstellbare Lenksäule mit einem solchen Spannbolzen. Des Weiteren betrifft die Erfindung ein Verfahren zur Herstellung eines solchen Spannbolzens.

Beim Stand der Technik ist es bekannt, Spannbolzen in Feststelleinrichtungen für verstellbare Lenksäulen zu verwenden. Die verstellbare Lenksäule weist dabei ein Stellteil (= Manteleinheit oder Mantelrohr), das die Lenkspindel drehbar lagert, und ein Halteteil (= Montageteil), das direkt oder indirekt mit dem Fahrzeugaufbau verbunden ist, auf.

Aus der EP 1 500 570 A2 ist eine verstellbare Lenksäule bekannt, bei der das Mantelrohr zwischen zwei Seitenwangen eines Montage- bzw. Trägerteils gehalten. Es ist eine Feststelleinrichtung vorgesehen, die zwischen einer gelösten Einstellung, in der das Mantelrohr gegenüber dem Montageteil verstellbar ist, und einer fixierten Einstellung, in der das Mantelrohr gegenüber dem Montageteil fixiert ist, wahlweise verstellt werden kann. Die Feststelleinrichtung umfasst einen Spannbolzen, der die beiden Schenkel und das Mantelrohr quer zur Achse der Lenkspindel durchsetzt. Der Spannbolzen trägt an einem Ende eine Mutter und am anderen Ende ein Spannglied. Das Spannglied besteht aus einer Nockenscheibe, deren Nocken mit Schrägflächen (=Nockenfolger)des Feststellteils zusammenwirken, wobei die Nockenscheibe und das Feststellteil vom Spannbolzen durchsetzt werden. Bei der Betätigung des Betätigungshebels wird der Nocken gegenüber den Schrägflächen des Feststellteils, dass heißt dem Nockenfolger, verdreht, wobei der Nocken seine Position entlang der Nockenfolgerkontur verändert und sich der Abstand zwischen Nocken und Nockenfolger zueinander verändert. Entsprechend wird durch die Verstellung des Betätigungshebels in die fixierte Einstellung der Spannbolzen mit Hilfe des Spannglieds und der Mutter unter Zugspannung gesetzt, so dass Verzahnungselemente, zur Fixierung der Lenksäule in Eingriff gebracht werden. Wird der Betätigungshebel in die gelöste Einstellung bewegt, so werden entsprechend die Verzahnungselemente außer Eingriff gebracht und das Mantelrohr ist gegenüber dem Montageteil verstellbar.

Da der Nocken mit dem Nockenfolger zusammenwirkt, um die entsprechende Zugspannung in den Spannbolzen einzubringen, besitzen Nocken und Nockenfolgerkontur jeweils eine aufeinander abgestimmte Kontur. Es handelt sich, bildlich gesprochen, um zwei miteinander zusammenwirkende bzw. ineinandergreifende und in ihrer Oberflächenform bzw. Kontur aufeinander abgestimmte Gebirge. Die Festlegung, welches dieser "Gebirge" nun der Nocken ist und welches dieser "Gebirge" nun die Nockenfolgerkontur ist, ist dabei eine Frage der Sprachkonvention. Üblicherweise wird das "Gebirge" mit den prägnanter heraustretenden Erhöhungen als Nocken und das "Gebirge" mit der gleichmäßiger verlaufenden Oberflächenform bzw. Kontur als Nockenfolgerkontur bezeichnet. Dies muss aber nicht zwingend so sein. Insofern kann auch die Nockenfolgerkontur als Nocken und entsprechend der Nocken als Nockenfolgerkontur bezeichnet werden.

Alternativ zu einem formschlüssigen Eingriff zwischen Verzahnungselementen sind im Stand der Technik Lösungen bekannt, bei denen die Seitenwangen des Montageteils mit Seitenflächen am Mantelrohr, zur Fixierung des Mantelrohrs, in einen reibschlüssigen Verbund miteinander gebracht werden, wobei die übrigen Elemente der Feststelleinrichtung im wesentlichen dieselben sind. Ein Beispiel hierfür ist die EP1180466A2.

Aus der GB 910,258 ist ein gattungsgemäßer Spannbolzen bekannt, auch wenn es in dieser Schrift nicht um eine Feststelleinrichtung für eine verstellbare Lenksäule geht.

Bei den bisher bekannten Feststelleinrichtungen für verstellbare Lenksäulen kommen Spannbolzen zum Einsatz, welche mit separat gefertigten Nockenscheiben zusammenwirken. Die auf den Nockenscheiben angeordneten Nocken werden mittels des Spannbolzens über eine Nockenfolgerkontur einer wiederum separat gefertigten Nockenfolgerscheibe geführt. Sowohl die Nockenscheibe mit den daran angeordneten Nocken als auch die Nockenfolgerscheibe mit der darauf angeordneten Nockenfolgerkontur werden beim Stand der Technik als separate Bauteile, häufig im Sinterverfahren, hergestellt und anschließend am Spannbolzen oder an der Feststelleinrichtung befestigt. Durch die Vielzahl der Einzelteile ist die Montage derartiger Systeme aufwendig.

Aufgabe der Erfindung ist es, einen einfachen und kostengünstig herstellbaren gattungsgemäßen Spannbolzen vorzuschlagen.

Diese Aufgabe wird gelöst, indem der, vorzugsweise jeder, Nocken eine mit zunehmendem Abstand vom Spannbolzen konstante oder abnehmende Querschnittsfläche aufweist.

Die Erfindung sieht somit vor, dass der Spannbolzen und zumindest ein Nocken als ein einstückiges Bauteil ausgebildet sind und der Nocken die genannte Form aufweist, was ihn kostengünstig mittels Umformen herstellbar macht. Auch der Spannbolzen und zumindest eine Nockenfolgerkontur können als ein einstückiges Bauteil ausgebildet sein. Unter einstückig wird in diesem Zusammenhang insbesondere verstanden, dass der Spannbolzen und der zumindest eine Nocken oder der Spannbolzen und die zumindest eine Nockenfolgerkontur gemeinsam als ein Stück bzw. ein integrales Bauteil hergestellt werden. Nicht einstückig ist in diesem Sinn, wenn der Spannbolzen und der Nocken oder die Nockenfolgerkontur zunächst als separate Bauteile hergestellt werden und anschließend durch zusätzliche Mittel, wie z.B. verschweißen, verkleben, vernieten, verschrauben und dergleichen aneinandergefügt bzw. miteinander verbunden werden. Es existieren also von Anfang an keine Trennflächen zwischen Spannbolzen und Nocken bzw. zwischen Spannbolzen und Nockenfolgerkontur. Durch den erfindungsgemäßen Spannbolzen wird der Zusammenbau der Feststelleinrichtung durch die einstückige Ausbildung vereinfacht und damit kostengünstiger. Es sind also auch in entsprechenden Schnitten durch diese Bauteile keine Trennflächen zu erkennen.

Mit Vorzug ist zumindest einer der Nocken auf einer Scheibe, der Nockenscheibe, angeordnet, die ebenfalls einstückig mit der Spannbolzenachse ausgebildet ist. Besonders bevorzugt sind alle Nocken auf dieser Scheibe angeordnet. Alternativ kann die Nockenfolgerkontur auf einer Scheibe, der Nockenfolgerscheibe, angeordnet sein, die dann vorzugsweise einstückig mit der Spannbolzenachse ausgebildet ist. Besonders bevorzugt ist in diesem Fall, dass dabei die gesamte Nockenfolgerkontur auf dieser Scheibe angeordnet ist. Die Nockenscheibe oder Nockenfolgerscheibe sind deshalb als Scheiben bezeichnet, weil ihre axiale Erstreckung, die durch ihre Stirnflächen begrenzt sind, vorzugsweise deutlich kürzer als ihre radiale Erstreckung, die durch ihre Umfangsfläche begrenzt ist, ist. Mit Vorzug ist die Nockenscheibe oder alternativ die Nockenfolgerscheibe so angeordnet, dass die Flächennormalen ihrer Stirnfläche etwa parallel zur Spannbolzenachse, die entlang des Spannbolzens längserstreckt ist, ausgerichtet sind. Die Nockenkontur der Nocken bzw. die Nockenfolgerkontur ist mit Vorzug in einer Richtung parallel zur Spannbolzenachse über die Nockenscheibe erhaben (bzw. vorstehend bzw. überstehend) zur Nockenscheibe bzw. Nockenfolgescheibe ausgebildet. Weil sich in diesem Fall ein größerer fertigungstechnischer Vorteil im Vergleich zur integralen Ausbildung des Spannbolzens mit der Nockenfolgerscheibe ergibt, ist besonders bevorzugt die Nockenscheibe mit den Nocken einstückig mit dem Spannbolzen ausgebildet. Grundsätzlich ist es denkbar, nur einen Nocken zu verwenden. In der Regel ist es aber schon aus Gründen der symmetrischen Kräfteeinleitung in den Spannbolzen günstig, wenn mehrere Nocken, zum Beispiel paarweise radial gegenüberliegend oder gleichmäßig über den Umfang des Spannbolzens verteilt, am Spannbolzen angeformt sind. In diesem Sinne ist bevorzugt auch vorgesehen, dass der Spannbolzen entlang einer Spannbolzenachse längserstreckt ist und der oder die Nocken, bezogen auf die Spannbolzenachse, in radialer Richtung über den Spannbolzen überstehen. Mit anderen Worten sind die Nocken in Richtung der Spannbolzenachse erhaben auf der Nockenscheibe angeordnet, wobei die erhabene Kontur sich in radialer Richtung auf der Nockenscheibe erstreckt.

In einer bevorzugten Ausführungsform überragt der Spannbolzen die Nocken und, falls vorhanden, die Nockenscheibe in Richtung der Spannbolzenachse beidseits.

Dabei ist vorzugsweise vorgesehen, dass der oder die Nocken, vorzugsweise am Spannbolzen, unmittelbar mit der Nockenfolgerkontur, vorzugsweise an der Lenksäule, zusammenwirken. Insbesondere gleiten beim Verdrehen des Spannbolzens, vorzugsweise gegenüber der Nockenfolgerkontur, der oder die Nocken auf der Nockenfolgerkontur ab. Dabei ist es unerheblich, ob ein Stellhebel direkt den Spannbolzen mit dem oder den darauf angeordneten Nocken in Drehrichtung betätigt oder die Nockenfolgerkontur betätigt. Gleiches gilt im umgekehrten Fall, wenn die Nockenfolgerkontur einstückig mit dem Spannbolzen ausgebildet ist.

In der besonders bevorzugten Ausführungsform sind auf der Nockenscheibe drei Nocken angeordnet, wobei die Nocken mit einer, mit, vorzugsweise in radialer Richtung bezüglich der Spannbolzenachse, zunehmendem Abstand vom Spannbolzen konstanten oder abnehmenden Querschnittsfläche ausgebildet sind. Dabei wird der erfindungsgemäße Spannbolzen mit Vorzug durch Umformen, besonders bevorzugt durch Fließpressen, hergestellt.

Beim Stand der Technik sind verschiedene Umformverfahren bekannt. Gemeinsam ist ihnen, dass es sich um ein plastisches Ändern der Form eines festen Körpers unter Erhaltung von Masse und Stoffzusammenhang handelt. Zur Herstellung eines erfindungsgemäßen Spannbolzens kann z. B. das sogenannte Fließpressverfahren angewendet werden. Hierbei handelt es sich nach DIN 8583 um ein Druckumformverfahren bzw. eine Massivumformung, die durch einen einstufigen oder mehrstufigen Fertigungsvorgang sowohl Hohl- als auch Vollkörper erstellen kann. Bei diesem Verfahren wird der Werkstoff unter Einwirkung eines hohen Drucks zum Fließen gebracht. Dabei drückt ein Stempel den Werkstückrohling durch eine formgebende Matrize. Das Umformen erfolgt meist bei Raumtemperatur, wobei eine hohe Maßgenauigkeit sowie Oberflächengüte erreicht werden kann. Denkbar und möglich ist es, den Rohling zur Umformung zu erwärmen.

Eine verstellbare Lenksäule mit einer Feststelleinrichtung mit einem erfindungsgemäßen Spannbolzen umfasst vorzugsweise eine die Lenkspindel drehbar lagernde Stelleinheit, die insbesondere in Form einer die Lenkspindel umgreifenden Manteleinheit ausgebildet ist, und eine am Chassis des Kraftfahrzeuges befestigbare Konsoleneinheit, gegenüber der die Stelleinheit in der geöffneten Stellung der Feststelleinrichtung, vorzugsweise in der Höhe und/oder der Längsrichtung der Lenkspindel, verstellbar ist, wobei die Stelleinheit in der geschlossenen Stellung der Feststelleinrichtung in ihrer Position an der Konsoleneinheit fixiert ist.

Die Feststelleinrichtung kann Verzahnungen oder dergleichen zum formschlüssigen Feststellen bzw. Fixieren der Stelleinheit an der Konsoleneinheit im geschlossenen Zustand der Feststelleinheit vorsehen. Alternativ ist es auch möglich, dass die Stelleinheit an der Konsoleneinheit im geschlossenen Zustand der Feststelleinheit, z.B. über Lamellenpakete, reibschlüssig gehalten bzw. festgestellt ist. Vorteilhafte Ausführungsformen sehen vor, dass die Konsoleneinheit zwei Seitenwangen aufweist, zwischen denen die Stelleinheit angeordnet ist. Die Seitenwangen sind günstigerweise in der geschlossenen Stellung der Feststelleinrichtung an die Stelleinheit angedrückt. Der Spannbolzen verläuft vorzugsweise quer zur Längsachse der Lenkspindel und durchsetzt Öffnungen in den Seitenwangen und eventuell auch in der Stelleinheit.

Weitere Einzelheiten und Merkmale der vorliegenden Erfindung ergeben sich aus der Figurenbeschreibung. Dabei zeigen:
- Fig. 1 u. 2: Darstellungen zum Stand der Technik,
- Fig. 3 u. 4: ein erstes erfindungsgemäßes Ausführungsbeispiel eines Spannbolzens,
- Fig. 5 bis 7: vier verschiedene Stellungen eines Nockens auf einer Nockenfolgerkontur,
- Fig. 8: eine Draufsicht auf die in den Fig. 5 bis 7 dargestellte Nockenscheibe mit Nocken,
- Fig. 9 u. 10: Darstellungen der den Nocken der Nockenscheibe gem. Fig. 8 zugeordneten Nockenfolgerkontur auf der Nockenfolgerscheibe,
- Fig. 11 u. 12: Schnitte entlang der Schnittlinien AA und BB gem. Fig. 8,
- Fig. 13: eine Draufsicht auf ein weiteres erfindungsgemäßes Ausführungsbeispiel eines Spannbolzens,
- Fig. 14: ein weiteres erfindungsgemäßes Ausführungsbeispiel eines Spannbolzens in Draufsicht,
- Fig. 15: die dem Ausführungsbeispiel gem. Fig. 13 zugeordnete Nockenfolgerkontur,
- Fig. 16 u. 17: Schnitte entlang der Schnittlinien CC und DD aus Fig. 13,
- Fig. 18: ein Ausführungsbeispiel für die erfindungsgemäße Lenksäule in auseinandergezogener Darstellung analog zur Darstellung des Standes der Technik gemäß Fig. 1, und
- Fig. 19: eine schematische Ansicht einer alternativen Ausführungsform einer Nockenfolgerscheibe mit Nockenfolgerkontur.

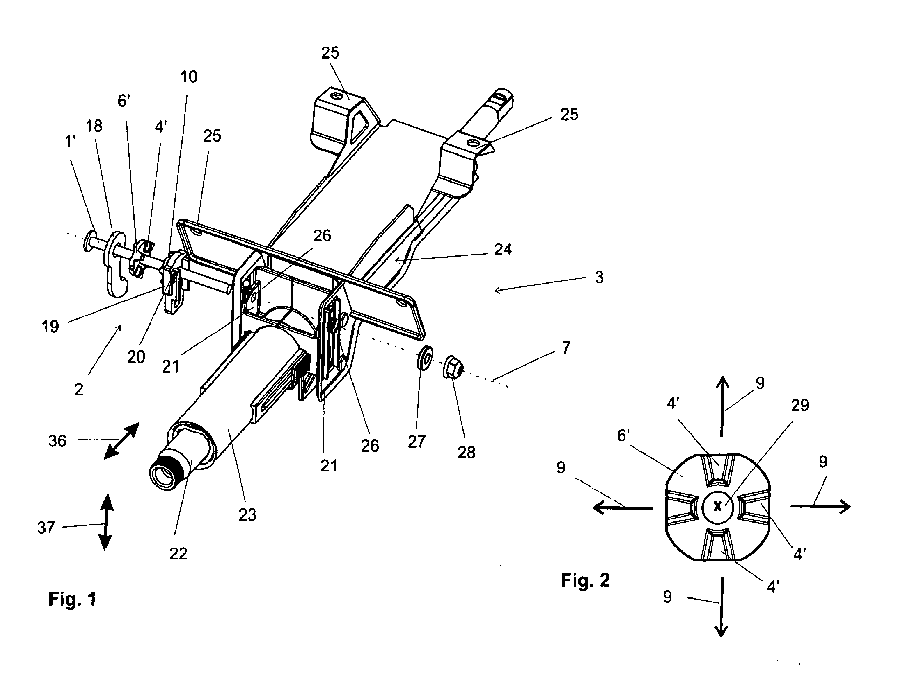

Fig. 1 zeigt eine verstellbare Lenksäule 3 gemäß dem Stand der Technik. Diese weist eine drehbar, in der hier als Manteleinheit 23 ausgebildeten Stelleinheit, gelagerte Lenkspindel 22 auf. Die Manteleinheit 23 ist über die Feststelleinrichtung 2 an der Konsoleneinheit 24 gehalten, welche mittels der Befestigungslaschen 25 in an sich bekannter Art und Weise am Chassis eines Fahrzeugs befestigt werden kann. Die in Fig. 1 gezeigte Lenkspindel 22 kann, wie beim Stand der Technik bekannt, sowohl in ihren Längsrichtungen 36, als auch in den Richtungen 37 in der Höhe verstellt werden, indem die Manteleinheit 23 entsprechend relativ zur Konsoleneinheit 24 verschoben bzw. verschwenkt wird. Dies ist in sich bekannt und muss nicht weiter erläutert werden.

Um die Manteleinheit 23 und die Lenkspindel 22 in der einmal eingestellten Position festzustellen, ist im gezeigten Beispiel die Feststelleinrichtung 2 vorgesehen. Diese weist den Spannbolzen 1', den Hebel 18, die Nockenscheibe 6', die Nockenfolgerscheibe 10, das Feststellteil 19 mit den daran angeordneten Verzahnungen 20 und die Beilagscheibe 27 sowie die Mutter 28 auf. Die Bauteile der Feststelleinrichtung 2 sind im gezeigten Beispiel in einer auseinander gezogenen Darstellung veranschaulicht. Im zusammengebauten Zustand kann durch Schwenken des Hebels 18 um die Spannbolzenachse 7 der Spannbolzen 1' um seine Längsachse 7 gedreht werden, wobei die durch geeignete Mittel drehfest mit dem Spannbolzen 1 verbundene Nockenscheibe 6' mitgedreht wird. Die Nockenfolgerscheibe 10 mit der Nockenfolgerkontur 5 ist drehfest am Feststellteil 19 befestigt, welches über die Verzahnung 20 wiederum drehfest in eine entsprechende Gegenverzahnung der Seitenwangen 21 der Konsoleneinheit 24 eingreifen. Durch diese Anordnung wird, wie an sich bekannt, erreicht, dass beim Verschwenken des Hebels 18 die Nocken 4' der Nockenscheibe 6' an der korrespondierenden Nockenfolgerkontur 5 der Nockenfolgerscheibe 10 entlang gleiten. Durch die an der Nockenfolgerkontur 5 vorgesehenen rampenartigen Abschnitte, kommt es durch Verdrehen der Nockenscheibe 6' relativ zur Nockenfolgerscheibe 10 zu einer Vergrößerung des Abstandes zwischen diesen beiden Bauteilen, was wiederum zu einem Verspannen mittels des Spannbolzens 1' führt, indem der Spannbolzen 1' die beiden einander gegenüberliegenden Seitenwangen 21 der Konsoleneinheit 24 zusammendrückt, wodurch die Manteleinheit 23 in der einmal eingestellten Position arretiert wird. Zum Lösen der Feststelleinrichtung 2 wird der Hebel 18 in die entgegengesetzte Richtung geschwenkt und damit der Spannbolzen 1' und die Nockenscheibe 6' in die entgegengesetzte Richtung gedreht.

Beim Stand der Technik sind der Spannbolzen 1', die Nockenscheibe 6' und die Nockenfolgerscheibe 10 als separate Bauteile ausgebildet, die meist durch Formschluss miteinander bzw. mit anderen Bauteilen verbunden werden. Fig. 2 zeigt eine Draufsicht auf eine beim Stand der Technik bekannte Nockenscheibe 6' mit vier darauf angeordneten Nocken 4'. In der Mitte befindet sich das Loch 29, durch das der Spannbolzen 1' hindurch gesteckt wird. Die Mittel zur drehfesten Verbindung der Nockenscheibe 6' mit dem Spannbolzen 1' befinden sich in der Regel auf der in Fig. 2 nicht zu sehenden Rückseite der Nockenscheibe 6'. Beim Stand der Technik sind die Nocken 4' in der Regel so ausgebildet, dass ihre Querschnittsfläche mit zunehmendem Abstand in radialer Richtung 9, ausgehend vom zentralen Loch 29, zunimmt, wie dies auch Fig. 2 zu entnehmen ist.

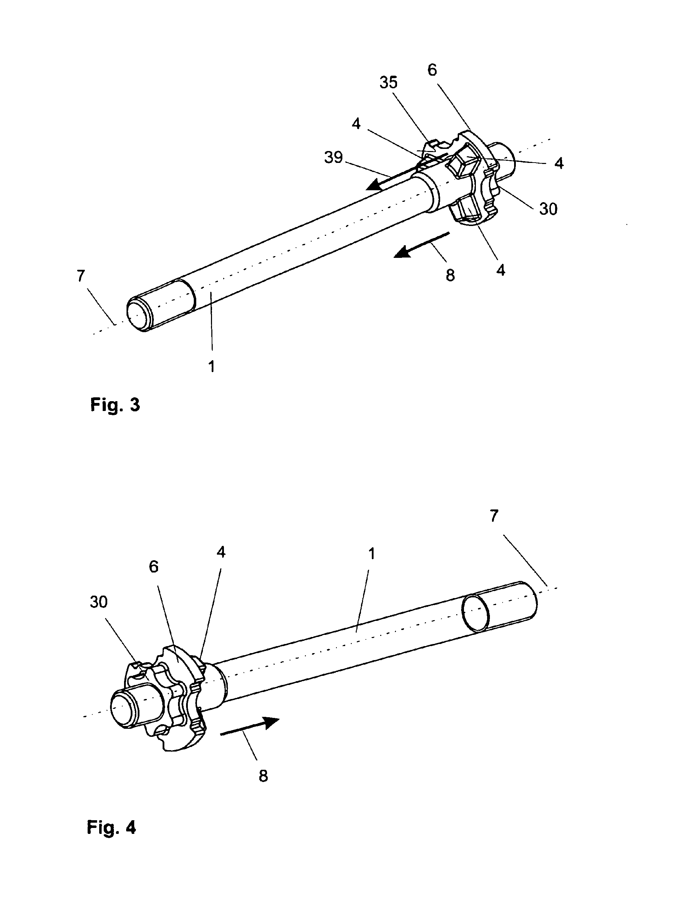

Die Fig. 3 und 4 zeigen nun ein erstes erfindungsgemäßes Ausführungsbeispiel für den Spannbolzen 1, bei dem die Nocken 4 und die Nockenscheibe 6 einstückig an dem Spannbolzen 1 angeformt sind. Fig. 3 zeigt eine perspektivische Ansicht, bei der die Nocken 4 besonders gut zu sehen sind. Fig. 4 zeigt eine perspektivische Ansicht aus der entgegengesetzten Richtung.

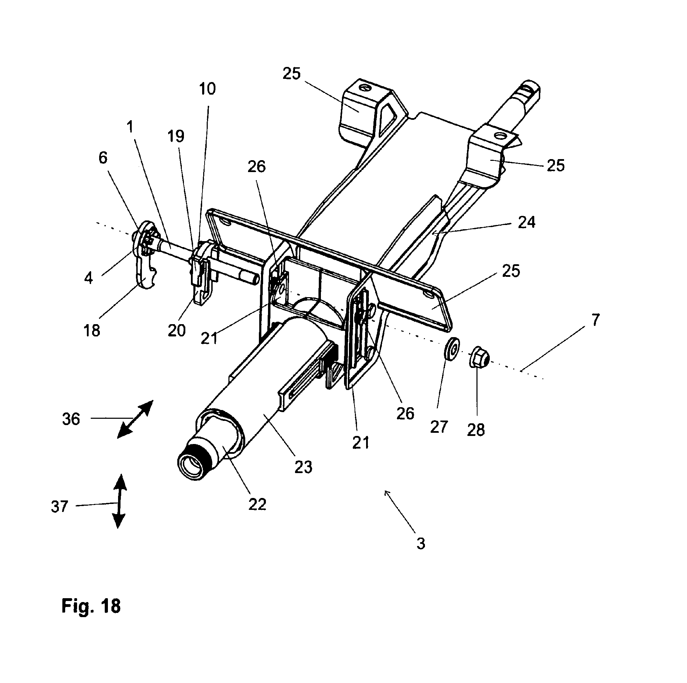

Im gezeigten Ausführungsbeispiel verläuft die Spannbolzenachse 7 parallel zur Flächennormale 39 der oberen Stirnfläche bzw. der Oberfläche 35 der Nockenscheibe 6. Die drei Nocken 4 stehen in Richtung 8, die entsprechend parallel zur Flächennormalen 39 verläuft, parallel zur Spannbolzenachse 7 über die Nockenscheibe 6 über. Darüber hinaus stehen die Nocken 4 auch in einer jeweils radialen Richtung 9, bezogen auf die Spannbolzenachse 7, über den (zylindrischen Bereich des) Spannbolzen(s) 1 über. Mit anderen Worten: Die Nocken 4 sind in Richtung der Spannbolzenachse, auf einer der Stirnflächen der Nockenscheibe 6, erhaben auf der Nockenscheibe 6 angeordnet, wobei die erhabene Kontur sich in radialer Richtung auf der Nockenscheibe 6 erstreckt. Die Querschnittsfläche der Nocken 4 weist mit zunehmendem Abstand vom Spannbolzen 1 konstante oder abnehmende Werte auf. Dies wird weiter unten noch im Detail gezeigt und erläutert. In Fig. 4 ist eine Ausführungsform des erfindungsgemäßen Spannbolzens veranschaulicht, bei der auf der dem Nocken 4 gegenüberliegenden Stirnfläche der Nockenscheibe 6 ein Formteil 30 angeformt, beispielsweise zur Ausbildung einer formschlüssigen Verbindung mit einem Hebel 18 der eingangs erläuterten Feststelleinrichtung 2. Ein erfindungsgemäßes Ausführungsbeispiel einer Feststelleinrichtung 2 bzw. einer verstellbaren Lenksäule 3 ergibt sich, wenn man den Spannbolzen 1' und die Nockenscheibe 6' des Standes der Technik bei dem Ausführungsbeispiel gem. Fig. 1 durch den erfindungsgemäßen Spannbolzen 1 mit einstückig angeformten Nocken 4 und Nockenscheibe 6 ersetzt, wie dies in Fig. 18 dargestellt ist. Die anderen Merkmale, wie sie für die Fig. 1 bereits beschrieben wurden, sind hier in gleicher Weise ausgebildet. Wobei dies natürlich nur ein Beispiel ist. Bei den erfindungsgemäß ausgebildeten verstellbaren Lenksäulen 3 kann eine Höhen- und/oder eine Tiefenverstellung realisiert sein. Der mittels des erfindungsgemäßen Spannbolzens 1 betätigte Klemmmechanismus kann eine für den Formschluss vorgesehene Verzahnung, wie sie z. B. in Fig. 1 oder in der EP 1 500 570 A2 gezeigt ist, aufweisen. Erfindungsgemäße Spannbolzen können, jedoch ohne die Anwendung darauf zu beschränken, in allen Lenksäulen eingesetzt sein, die gemäß dem Stand der Technik mit separat hergestellten Spannbolzen und Nocken und Nockenfolger ausgebildet sind. So ist der Einsatz in Lenksäulen, bei denen die Fixierung der eingestellten Position über ein reibschlüssiges Verspannen erfolgt, möglich. Das Gleiche gilt für alle nachfolgend noch geschilderten erfindungsgemäßen Ausführungsbeispiele.

In der in den Fig. 3 und 4 veranschaulichten erfindungsgemäßen Ausführungsform überragt der Spannbolzen 1 sowohl die Nocken 4, als auch die Nockenscheibe 6, als auch das Formteil 30, beidseits in Richtung der Spannbolzenachse 7.

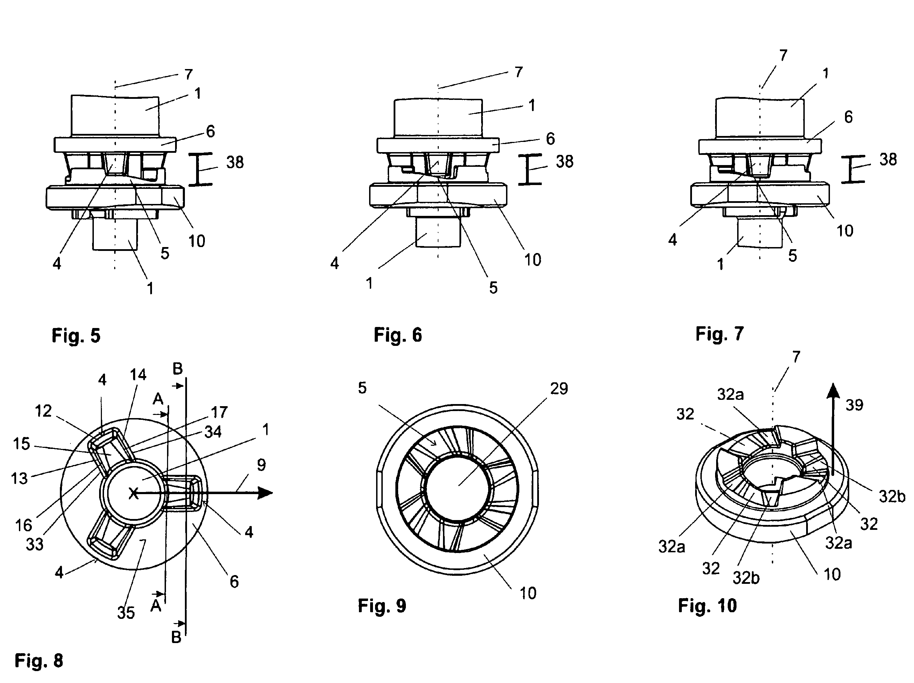

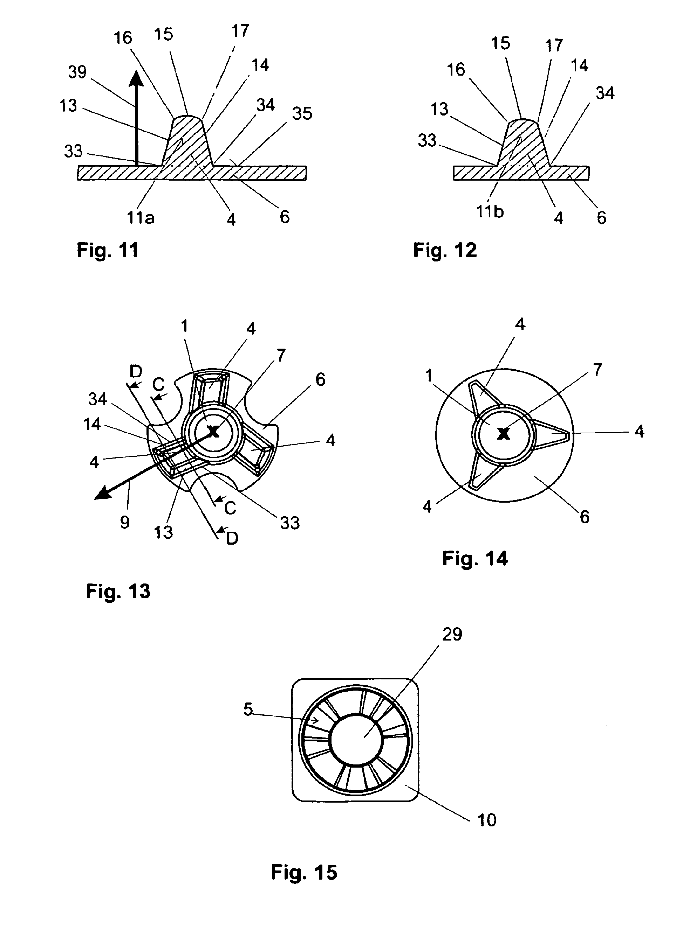

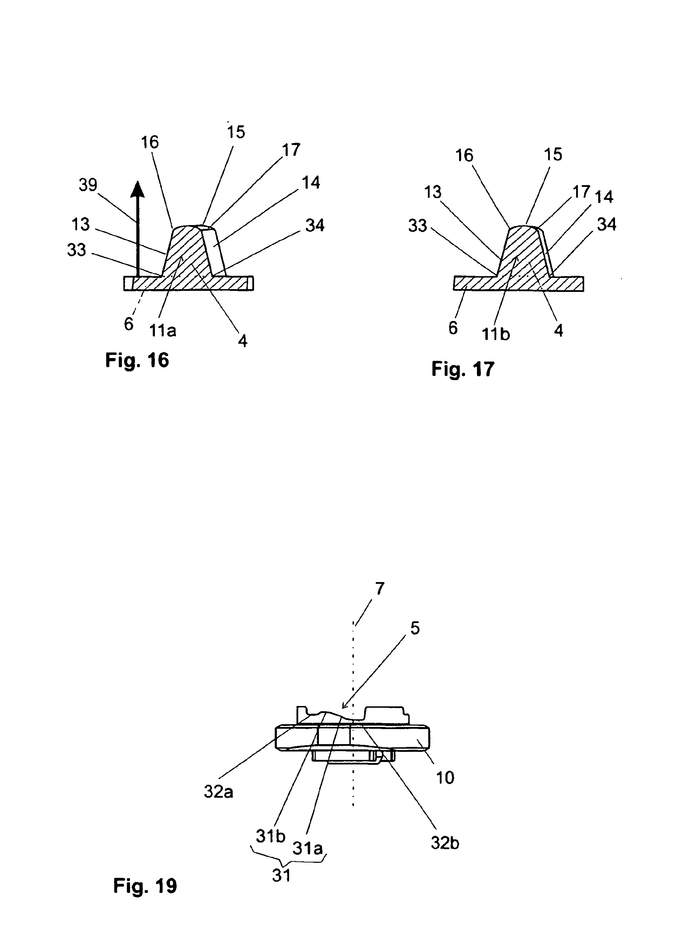

Die Fig. 5 bis 8, 11 und 12 zeigen nun verschiedene Darstellungen eines zweiten erfindungsgemäßen Ausführungsbeispiels, bei dem ebenfalls die Nockenscheibe 6 und die daran angeordneten Nocken 4 einstückig am Spannbolzen 1 angeformt sind. Die in den Figuren 9 und 10 gezeigte, als Gegenstück vorgesehene Nockenfolgerscheibe 10 weist ein zentrales Loch 29 auf, durch das der Spannbolzen 1 hindurchführbar ist. Die von der Nockenfolgerkontur 5 abgewandte Stirnseite der Nockenfolgerscheibe 10 wird in an sich bekannter Art und Weise drehfest mit einem entsprechenden Bauteil der Feststelleinrichtung 2 verbunden, so dass durch Drehen des Spannbolzens 1 um die Spannbolzenachse 7 die Nocken 4 an der Nockenfolgerkontur 5 entlang gleiten. Im gezeigten Ausführungsbeispiel weist die Nockenfolgerkontur 5, entsprechend der Anzahl der Nocken 4, drei in sich zusammenhängende Nockenfolgerkonturabschnitte auf. Jeder dieser drei Abschnitte wird aus einem rampenartig in Richtung der Spannbolzenachse 7 ansteigenden Bereich 31 mit zwei jeweils benachbarten und einander gegenüberliegend angeordneten Plateaubereichen 32a und 32b gebildet. Dabei ist der ansteigende Bereich 31 mit Vorzug in einen ersten Bereich 31 a und einen weiteren, direkt daran anschließenden Bereich 31 b, dessen Steigung kleiner als die des ersten Bereiches 31 a ist, versehen. Mit Vorzug können noch weitere Unterteilungen im Anstiegsbereich ausgebildet sein. Eine derartige Ausbildung der Nockenfolgerkontur ist in der Fig. 19 schematisch veranschaulicht. Die Fig. 5 bis 7 zeigen verschiedene Stellungen, in denen die Nocken 4 an den jeweiligen Bereichen der Nockenfolgerkontur 5 anliegen können. Fig. 5 zeigt die Betriebsstellung, in der die Nocken 4 auf den zur Schließstellung korrespondierenden Plateaubereichen 32a aufliegen. In dieser Stellung ist der Abstand 38 zwischen Nockenscheibe 6 und Nockenfolgerscheibe 10 maximal. Die Feststelleinrichtung befindet sich in der gespannten Endlage bzw. in der geschlossenen Stellung, in der die Manteleinheit 23 in ihrer Position in Längsrichtung 36 und/oder 37, der Höhe, arretiert ist. Die Fig. 6 zeigt eine Zwischenstellung, in der die Nocken 4 am ansteigenden Bereich 31 der Nockenfolgerkontur 5 entlang gleiten. Fig. 7 zeigt die zweite Endstellung, in der die Nocken in den Plateaubereichen 32b anliegen. Dies entspricht der geöffneten Stellung der Feststelleinrichtung 2, in der die Lenkspindel 22 bzw. die Manteleinheit 23 in ihrer Position relativ zur Konsoleneinheit 24 verstellt werden kann. Zum Arretieren wird durch Betätigen des Hebels 18 die Spannachse 1 in eine Richtung gedreht, in der die Nocken 4 wieder in die in Fig. 5 gezeigte Schließstellung gedreht werden. Fig. 9 zeigt eine Draufsicht auf die Nockenfolgerkontur 5. Fig. 11 zeigt eine perspektivische Ansicht. Die Ausformung der hier gezeigten Nockenfolgerkontur 5 ist natürlich nur ein Beispiel, sie wird in der Regel an die Form der Nocken 4 angepasst.

Fig.8 zeigt eine Draufsicht auf die auf der Nockenscheibe 6 angeordneten Nocken 4 dieses Ausführungsbeispiels aus Richtung der Spannbolzenachse 7. Alle drei Nocken 4 dieses Ausführungsbeispiels haben dieselbe Form. Dem Spannbolzen 1 gegenüberliegend befindet jeweils sich die Stirnfläche 12 des jeweiligen Nockens 4. Zwischen dem Spannbolzen 1 und der Stirnfläche 12 verlaufen jeweils die beiden einander gegenüberliegend angeordneten Seitenflächen 13, 14 des Nockens. Auf der der Nockenscheibe 6 gegenüberliegenden Seite wird die Oberfläche eines jeden Nockens durch die Deckfläche 15 gebildet. Zwischen der Deckfläche 15 und der Seitenfläche 13 verläuft zumindest eine erste obere Kante 16. Zwischen der Deckfläche 15 und der gegenüberliegenden Seitenfläche 14 verläuft zumindest eine zweite obere Kante 17. Die beiden genannten oberen Kanten 16 und 17 dieses Ausführungsbeispiels verlaufen parallel zueinander. Zwischen der Seitenfläche 13 und der Oberfläche 35 der Nockenscheibe 6 verläuft die erste untere Kante 33. Zwischen der zweiten Seitenfläche 14 und der Oberfläche 35 der Nockenscheibe 6 verläuft die zweite untere Kante 34. Auch diese beiden unteren Kanten verlaufen parallel zueinander. Die Seitenflächen 13 und 14 verlaufen in radialer Richtung 9 mit gleichbleibendem Abstand zueinander. Die Deckfläche 15 jedes Nockens 4 ist jeweils leicht gewölbt ausgebildet. Der Abstand zwischen Deckfläche 15 und der Oberfläche 35 der Nockenscheibe 6 nimmt in radialer Richtung 9 mit zunehmendem Abstand von der Spannbolzenachse 7 geringfügig ab, bis die Stirnfläche 12 erreicht ist. Durch diese Ausgestaltung der Nocken wird erreicht, dass jeder Nocken eine mit zunehmendem Abstand vom Spannbolzen 1 abnehmende Querschnittsfläche aufweist. Um dies zu veranschaulichen, sind die parallel zur Bolzenachse 7 verlaufende Schnitte AA und BB in Fig. 11 und 12 dargestellt. Die ausgehend von der Spannbolzenachse 7 radial in Richtung 9 verlaufende Gerade bildet eine Flächennormale auf beide Schnittebenen. Fig. 11 zeigt den Schnitt entlang der Schnittlinie AA, Fig. 12 zeigt den Schnitt entlang der Schnittlinie BB. Dies ermöglicht es, die Querschnittsflächen 11a und 11b miteinander zu vergleichen. Diese sind in den Fig. 11 und 12 zur besseren Visualisierung durch eine gestrichelte Linie getrennt von der Querschnittsfläche der Nockenscheibe 6 dargestellt. Diese Art der Darstellung bedeutet natürlich nicht, dass es sich bei den Nocken 4 und der Nockenscheibe 6 um getrennte Bauteile handelt. Diese sind, wie eingangs erläutert, einstückig ausgebildet. Zur Querschnittsfläche 11 a bzw. 11 b wird der Teil gezählt, der oberhalb der Oberfläche 35 der Nockenscheibe 6 liegt. Der Vergleich der Fig. 11 und 12 zeigt, dass die Querschnittsfläche der Nocken dieses Ausführungsbeispiels mit zunehmender radialer Entfernung von der Spannbolzenachse 7 geringfügig abnimmt. Alternativ könnte er auch konstant sein. Der Wert der Querschnittsfläche ist erfindungsgemäß entweder konstant oder nimmt mit größer werdendem Abstand von der Spannbolzenachse in der radialen Richtung 9 gemessen ab. Dabei ist die Änderung des Querschnitts monoton. Das heißt, dass die Abnahme der Querschnittsfläche oder das konstant Bleiben der Querschnittsfläche , aber vor allem das Nicht-Zunehmen der Querschnittsfläche mit zunehmendem Abstand von der Spannbolzenachse 7, vorzugsweise jeweils, für den gesamten Bereich zwischen Spannbolzen und Stirnfläche 12 gilt.

Fig. 14 zeigt eine Draufsicht auf eine Nockenscheibe 6 mit ebenfalls einstückig angeformten Spannbolzen 1 und Nocken 4. Die Nocken 4 sind hier so ausgebildet, dass ihre Querschnittsfläche mit zunehmender Entfernung in radialer Richtung von der Spannbolzenachse 7 relativ stark, um mehr als 20%, und damit auch mehr abnimmt, als im Ausführungsbeispiel gem. der Fig. 5 bis 12. Fig. 13 zeigt ein weiteres erfindungsgemäßes Ausführungsbeispiel, hier verlaufen die oberen Kanten 16 und 17 der Nocken 4 parallel zueinander, wie auch die unteren Kanten 33 und 34. Die genannten Kanten verlaufen jedoch nicht parallel zur radialen Richtung 9, wie im Ausführungsbeispiel gemäß Fig. 5 bis 12, sondern in einem spitzen Winkel hierzu. Auch bei diesem Ausführungsbeispiel ist gewährleistet, dass die jeweils normal zu einer, bezüglich der Spannbolzenachse 12 radialen Richtung 9 bestimmte Querschnittsfläche mit in radialer Richtung 9 zunehmendem Abstand von der Spannbolzenachse 7 konstant bleibt bzw. geringfügig abnimmt. Fig. 16 zeigt einen Schnitt entlang der Schnittlinie CC, Fig. 17 einen entsprechenden Schnitt entlang der Schnittlinie DD. Fig. 15 zeigt die für das Ausführungsbeispiel gem. Fig. 13 entsprechend ausgeformte Nockenfolgerkontur 5.

Bei den hier gezeigten erfindungsgemäßen Ausführungsbeispielen sind jeweils drei Nocken einstückig mit dem Spannbolzen 1 verbunden. Dies ist natürlich nur ein Beispiel, es kann sich auch um ein, zwei oder mehr als drei Nocken 4 handeln.

Im Sinne der Erfindung ist auch nicht zwingend vorgesehen, dass die Nocken 4 und die Nockenscheibe 6 einstückig mit dem Spannbolzen verbunden sind. Es ist auch denkbar, wie oben bereits ausgeführt, die Nockenfolgekontur 5 gegebenenfalls zusammen mit der Nockenfolgerscheibe 10 einstückig mit dem Spannbolzen zu verbinden. Als Gegenstück wird dann die Nockenscheibe 6' mit den Nocken 4' drehfest mit einem geeigneten anderen Bauteil der Feststelleinrichtung 2 verbunden. Bei diesen Ausführungsvarianten ist dann günstigerweise vorgesehen, dass die Nockenfolgerkontur 5 in der Richtung 8 parallel zur Spannbolzenachse 7 über die Nockenfolgerscheibe 10 übersteht. Sie weist dann z.B. analog zu den Fig. 9, 11 und 16 verschieden weit in Richtung 8 parallel zur Spannbolzenachse 7 von der Nockenfolgerscheibe 10 entfernte Plateaubereiche 32 und 32' bzw. dazwischen, in Richtung 8 ansteigende oder abfallende Bereiche 31 auf. Günstigerweise steht die Nockenfolgerkontur 5 natürlich auch in radialer Richtung 9 über den (zylindrischen Teil des) Spannbolzen(s) 1 über.

### Legende

### zu den Hinweisziffern:

- 1, 1': Spannbolzen
- 2: Feststelleinrichtung
- 3: Lenksäule
- 4, 4': Nocken
- 5: Nockenfolgerkontur
- 6, 6': Nockenscheibe
- 7: Spannbolzenachse
- 8: Richtung
- 9: radiale Richtung
- 10: Nockenfolgerscheibe
- 11a, 11b: Querschnittsfläche
- 12: Stirnfläche
- 13: Seitenfläche
- 14: Seitenfläche
- 15: Deckfläche
- 16: erste obere Kante
- 17: zweite obere Kante
- 18: Hebel
- 19: Feststellteil
- 20: Verzahnung

- 21: Seitenwange
- 22: Lenkspindel
- 23: Manteleinheit
- 24: Konsoleneinheit
- 25: Befestigungslasche
- 26: Loch
- 27: Beilagscheibe
- 28: Mutter
- 29: Loch
- 30: Formteil
- 31, 31 a, 31b: ansteigende Bereiche
- 32a,32b: Plateaubereich
- 33: erste untere Kante
- 34: zweite untere Kante
- 35: Oberfläche
- 36: Längsrichtung
- 37: Richtung der Höhe
- 38: Abstand
- 39: Flächennormale

## Patentansprüche

1. Spannbolzen (1) für eine Feststelleinrichtung (2) einer verstellbaren Lenksäule (3), wobei am Spannbolzen (1) zumindest ein Nocken (4) einstückig angeformt ist, **dadurch gekennzeichnet, dass** der, vorzugsweise jeder, Nocken (4) eine mit zunehmendem Abstand vom Spannbolzen (1) konstante oder abnehmende Querschnittsfläche (11, 11) aufweist.

2. Spannbolzen (1) nach Anspruch 1, **dadurch gekennzeichnet, dass** der oder die Nocken (4) auf einer Nockenscheibe (6) angeordnet ist (sind), wobei die Nockenscheibe (6) und der oder die Nocken (4) am Spannbolzen (1) einstückig angeformt sind.

3. Spannbolzen (1) nach Anspruch 2, **dadurch gekennzeichnet, dass** der Spannbolzen (1) entlang einer Spannbolzenachse (7) längserstreckt ist und der oder die Nocken (4) in einer Richtung (8) parallel zur Spannbolzenachse (7) über die Nockenscheibe (6) überstehen.

4. Spannbolzen (1) nach einem der Ansprüche 1 bis 3, **dadurch gekennzeichnet, dass** der Spannbolzen (1) entlang einer Spannbolzenachse (7) längserstreckt ist und der oder die Nocken (4) bezogen auf die Spannbolzenachse (7) in radialer Richtung (9) über den Spannbolzen (1) überstehen.

5. Spannbolzen (1) nach einem der Ansprüche 1 bis 4, **dadurch gekennzeichnet, dass** am Spannbolzen (1) der oder die Nocken (4), gegebenenfalls zusammen mit der Nockenscheibe (6), durch Umformen, vorzugsweise durch Fließpressen, einstückig angeformt ist (sind).

6. Spannbolzen (1) nach einem der Ansprüche 1 bis 5, **dadurch gekennzeichnet, dass** der Spannbolzen (1) entlang einer Spannbolzenachse (12) längserstreckt ist und zumindest einer der, vorzugsweise jeder, Nocken (4) eine normal zu einer bezüglich der Spannbolzenachse (7) radialen Richtung (9) bestimmte Querschnittsfläche (11, 11') aufweist, welche mit in radialer Richtung (9) zunehmendem Abstand von der Spannbolzenachse (7) konstant bleibt oder abnimmt.

7. Spannbolzen (1) nach einem der Ansprüche 1 bis 6, **dadurch gekennzeichnet, dass** einer der, vorzugsweise jeder, Nocken (4) eine dem Spannbolzen (1) gegenüberliegende Stirnfläche (12) und zwei einander gegenüberliegende, zwischen der Stirnfläche (12) und dem Spannbolzen (1) verlaufende Seitenflächen (13, 14) aufweist, wobei der Abstand bzw. die Abstände zwischen den Seitenflächen (12, 13) mit zunehmender Entfernung vom Spannbolzen (1) konstant sind oder abnehmen.

8. Spannbolzen (1) nach einem der Ansprüche 2 bis 4, **dadurch gekennzeichnet, dass** einer der, vorzugsweise jeder, Nocken (4) eine dem Spannbolzen (1) gegenüberliegende Stirnfläche (12) und zwei einander gegenüberliegende, zwischen der Stirnfläche (12) und dem Spannbolzen (1) verlaufende Seitenflächen (13, 14) und eine zwischen der Stirnfläche (12) und dem Spannbolzen (1) verlaufende, der Nockenscheibe (6) gegenüberliegende Deckfläche (15) aufweist, wobei zwischen der Deckfläche (15) und der einen Seitenfläche (13) zumindest eine erste obere Kante (16) angeordnet ist und zwischen der Deckfläche (15) und der der einen Seitenfläche (13) gegenüberliegenden Seitenfläche (14) zumindest eine zweite obere Kante (17) angeordnet ist, wobei die erste und die zweite obere Kante (16, 17) parallel zueinander verlaufen oder mit zunehmendem Anstand vom Spannbolzen (1) aufeinander zu laufen.

9. Feststelleinrichtung (2) für eine verstellbare Lenksäule (3) mit einem Spannbolzen (1) nach einem der Ansprüche 1 bis 8.

10. Verstellbare Lenksäule (3) mit einer Feststelleinrichtung (2) mit einem Spannbolzen (1) nach einem der Ansprüche 1 bis 8.

11. Verfahren zur Herstellung eines Spannbolzens (1) nach einem der Ansprüche 1 bis 8, **dadurch gekennzeichnet, dass** am Spannbolzen (1) der oder die Nocken (4), gegebenenfalls zusammen mit der Nockenscheibe (6), durch Umformen, vorzugsweise durch Fließpressen, einstückig angeformt wird (werden).

## Claims

1. Clamping bolt (1) for a locking device (2) of an adjustable steering column (3), at least one cam (4) being integrally formed on the clamping bolt (1), **characterised in that** the cam (4), preferably every cam, has a constant or decreasing cross-sectional area (11, 11) with increasing distance from the clamping bolt (1).

2. Clamping bolt (1) according to claim 1, **characterised in that** the cam(s) (4) is/are arranged on a cam disk (6), the cam disk (6) and the cam(s) (4) being integrally formed on the clamping bolt (1).

3. Clamping bolt (1) according to claim 2, **characterised in that** the clamping bolt (1) is longitudinally extended along a clamping bolt axis (7) and the cam(s) (4) project(s) beyond the cam disk (6) in a direction (8) parallel to the clamping bolt axis (7).

4. Clamping bolt (1) according to any one of claims 1 to 3, **characterised in that** the clamping bolt (1) is longitudinally extended along a clamping bolt axis (7) and the cam(s) (4) project(s) beyond the clamping bolt (1) in a radial direction (9) relative to the clamping bolt axis (7).

5. Clamping bolt (1) according to any one of claims 1 to 4, **characterised in that** the cam(s) (4), optionally together with the cam disk (6), is/are integrally formed on the clamping bolt (1) by plastic deformation, preferably by impact extrusion.

6. Clamping bolt (1) according to any one of claims 1 to 5, **characterised in that** the clamping bolt (1) is longitudinally extended along a clamping bolt axis (12) and at least one cam (4), preferably every cam, has a cross-sectional area (11, 11) determined normal to a radial direction (9) relative to the clamping bolt axis (7), which cross-sectional area remains constant or decreases with increasing distance in the radial direction (9) from the clamping bolt axis (7).

7. Clamping bolt (1) according to any one of claims 1 to 6, **characterised in that** one of the cams (4), preferably every cam, has an end face (12) opposite the clamping bolt (1) and two mutually opposed side faces (13, 14) extending between the end face (12) and the clamping bolt (1), the distance or distances between the side faces (12, 13) remaining constant or decreasing with increasing distance from the clamping bolt (1).

8. Clamping bolt (1) according to any one of claims 2 to 4, **characterised in that** one of the cams (4), preferably every cam, has an end face (12) opposite the clamping bolt (1), two mutually opposed side faces (13, 14) extending between the end face (12) and the clamping bolt (1), and an upper face (15), opposite the cam disk (6), extending between the end face (12) and the clamping bolt (1), at least a first upper edge (16) being arranged between the upper face (15) and a side face (13) and at least a second upper edge (17) being arranged between the upper face (15) and the side face (14) opposite the side face (13), the first and the second upper edges (16, 17) extending parallel to one another or tapering towards one another with increasing distance from the clamping bolt (1).

9. Locking device (2) for an adjustable steering column (3) having a clamping bolt (1) according to any one of claims 1 to 8.

10. Adjustable steering column (3) comprising a locking device (2) having a clamping bolt (1) according to any one of claims 1 to 8.

11. Method for producing a clamping bolt (1) according to any one of claims 1 to 8, **characterised in that** the cam(s) (4), optionally together with the cam disk (6), is/are integrally formed on the clamping bolt (1) by plastic deformation, preferably by impact extrusion.

## Revendications

1. Boulon de serrage (1) pour un dispositif d'arrêt (2) d'une colonne de direction (3) réglable, sachant qu'au moins une came, (4) est formée d'un seul tenant sur le boulon de serrage (1), **caractérisé en ce que** la, de préférence chaque came (4) présente une aire de section (11, 11') constante ou décroissant en même temps que la distance par rapport au boulon de serrage (1) croît.

2. Boulon de serrage (1) selon la revendication 1, **caractérisé en ce que** la ou les cames (4) est/sont disposées sur un disque à cames (6), sachant que le disque à cames (6) et la ou les cames (4) sont formés d'un seul tenant sur le boulon de serrage (1).

3. Boulon de serrage (1) selon la revendication 2, **caractérisé en ce que** le boulon de serrage (1) est étiré en longueur le long d'un axe de boulon de serrage (7) et la ou les cames (4) dépassent du disque à cames (6) dans une direction (8) parallèle à l'axe de boulon de serrage (7).

4. Boulon de serrage (1) selon l'une quelconque des revendications 1 à 3, **caractérisé en ce que** le boulon de serrage (1) est étiré en longueur le long d'un axe de boulon de serrage (7) et la ou les cames (4) dépassent du boulon de serrage (1) par rapport à l'axe de boulon de serrage (7) dans le sens radial (9).

5. Boulon de serrage (1) selon l'une quelconque des revendications 1 à 4, **caractérisé en ce que** la ou les cames (4) est/sont formées d'un seul tenant éventuellement conjointement avec le disque à cames (6) par façonnage, de préférence par formage par fluage sur le boulon de serrage (1).

6. Boulon de serrage (1) selon l'une quelconque des revendications 1 à 5, **caractérisé en ce que** le boulon de serrage (1) est étiré en longueur le long d'un axe de boulon de serrage (12) et au moins l'une, de préférence chacune, des cames (4) présente une aire de section (11, 11') déterminée normalement à un sens (9) radial par rapport à l'axe de boulon de serrage (7), laquelle aire reste constante ou décroît en même temps que la distance par rapport à l'axe de boulon de serrage (7) augmente dans le sens radial (9).

7. Boulon de serrage (1) selon l'une quelconque des revendications 1 à 6, **caractérisé en ce qu'**une, de préférence chacune, des cames (4) présente une surface frontale (12) opposée au boulon de serrage (1) et deux surfaces latérales (13, 14) opposées, s'étendant entre la surface frontale (12) et le boulon de serrage (1), sachant que la distance ou les distances entre les surfaces latérales (12, 13) sont constantes ou décroissent en même temps que l'éloignement du boulon de serrage (1) croît.

8. Boulon de serrage (1) selon l'une quelconque des revendications 2 à 4, **caractérisé en ce qu'**une, de préférence chacune, des cames (4) présente une surface frontale (12) opposée au boulon de serrage (1) et deux surfaces latérales (13, 14) opposées, s'étendant entre la surface frontale (12) et le boulon de serrage (1) et une surface de recouvrement (15) opposée au disque à cames (6), s'étendant entre la surface frontale (12) et le boulon de serrage (1), sachant qu'au moins une première arête supérieure (16) est disposée entre la surface de recouvrement (15) et une surface latérale (13) et au moins une deuxième arête supérieure (17) est disposée entre la surface de recouvrement (15) et la surface latérale (14) opposée à une surface latérale (13), sachant que la première et la deuxième arêtes supérieures (16, 17) s'étendent parallèlement ou se rejoignent avec une distance croissante par rapport au boulon de serrage (1).

9. Dispositif d'arrêt (2) pour une colonne de direction (3) réglable avec un boulon de serrage (1) selon l'une quelconque des revendications 1 à 8.

10. Colonne de direction réglable (3) dotée d'un dispositif d'arrêt (2) avec un boulon de serrage (1) selon l'une quelconque des revendications 1 à 8.

11. Procédé de fabrication d'un boulon de serrage (1) selon l'une quelconque des revendications 1 à 8, **caractérisé en ce que** la ou les cames (4) est/sont formées d'un seul tenant éventuellement conjointement avec le disque à cames (6) par façonnage, de préférence par formage par fluage sur le boulon de serrage (1).
